# EUROPEAN PATENT APPLICATION

(11) **EP 4 080 312 A1**
(43) Date of publication of application: **26.10.2022**
(21) Application number: 22168772.6
(22) Date of filing: 19.04.2022
(51) Int. Cl.: G05D 1/02, G06Q 10/04

(54) **A METHOD OF OPERATING A ROBOT**

(30) Priority: 23.04.2021 US 202163178764 P; 31.05.2021 EP 21176848
(71) Applicant: Carnegie Robotics, LLC, Pittsburgh, Pennsylvania 15201 (US)
(72) Inventor: LAROSE, David, Pittsburg, 15201 (US); THYBO, Claus, 6400 Sønderborg (DK)
(74) Representative: Inspicos P/S

(57) **Abstract**

A robot and a method of controlling the robot wherein the robot has a service schedule comprising a number of tasks. The robot receiving or deriving updated information and reordering a number of the tasks not yet performed in accordance with timing information in accordance with which the tasks must be completed.

## Description

The present invention relates to a method of controlling or operating a robot being able to perform tasks, update information relating to one or more tasks to perform and to alter its operation based on that updated information.

Robots are becoming more and more autonomic and are used in more and more areas or technologies. Robots still, however, tend to work along more or less rigid job descriptions.

A first aspect of the invention relates to a method of controlling a robot, the method comprising:
a) feeding a service schedule to a self-propelled robot, the service schedule identifying a plurality of tasks for the robot to perform, each task comprising one or more parameters in accordance with which the task is to be performed,
b) the robot completing one or more of the plurality of tasks,
c) the robot updating information relating to at least one of the tasks,
d) deriving, based on the updated information, an order of at least a first plurality of those of the plurality of tasks which are not yet completed and
e) performing the first plurality of tasks in the order derived.

In the present context, a robot is a self-propelled unit, which may move about in an area or scene and which may perform one or more tasks in the area or scene. The robot may comprise one or more elements for facilitating movement, such as wheels, belts, rollers, propellers, wings, fins, motors, engines, drives or the like. The robot may be self-navigating. Navigation may be obtained in a number of manners. In more simple manners, the robot may navigate based on infrastructure of a building, scene or venue, such as based on markings on a floor or a ceiling, based on signals from beacons or wires embedded in the floor/ground/ceiling or the like, when the robot moves on or along rails, or the same. In more complex scenarios, the robot comprises one or more sensors for sensing obstacles or the like, so that the robot may be able to avoid obstacles and move from one position to another without engaging or bumping into such obstacles. The robot may comprise a controller/processor for receiving sensor output so as to determine a position of the robot in a scene or area and potentially positions of obstacles and for determining a route in the scene or area. The controller/processor may further control an operation of the robot, such as the carrying out of a task of the robot.

The robot may be autonomous to the degree where the robot is able to react to unexpected situations, such as its path being blocked by luggage. The robot may realize this and move around the luggage to perform its task.

In this context, a task may be one or more of many types of tasks. A task may be a treatment of a surface, a cleansing of a surface, inspection of a surface, a transporting of goods from one position to another, a guiding of a person from one position to another, for example. Other tasks may be monitoring/surveillance, such as to determine positions of obstacles, dirty surfaces, but also perhaps to ascertain presence of items, such as paintings, furniture or the like, quality control of any kind, stock keeping so as to ensure that an amount of a type of item is sufficient or to determine the stock available, intrusion detection, such as detection of whether doors, windows or other elements are intact, person or intruder detection, or the like. A surface treatment may be a disinfection or painting/lacquering/sanding for example. A surface cleansing may be vacuuming, floor/surface mopping or the like. A transporting task may be bringing out fast food, hauling luggage, goods, mail or parcels, for example. Additional types of tasks may relate to maintenance, tidying up, weeding or the like, such as outside, such as in the fields where a robot may be weeding by identifying weeds and spraying/irradiating these. A task may then be the weeding of a field.

Tasks may be performed within a limited area, such as within a building or a part of a building. Cleaning operations, for example, usually will relate to a building, portions of a building, predetermined rooms, predetermined surfaces, predetermined surface types or the like.

Transporting may be within a building, such as bringing snacks from a bar to a room in a hotel, but may be within larger areas, such as bringing out fast food in a town or city. Transporting tasks may relate to the transport of any type of product, goods or the like in any environment, such as restocking shelves in a supermarket or storage rooms in hotels or hospitals, delivering goods or products within an overall structure (shops in an airport) or to individual consumers (fast food, groceries, parcels).

A service schedule identifies a plurality of tasks. The identification of a task may be a simple reference to a description of the task, which may be in the robot or elsewhere. As described, a task may be defined very precisely, such as exactly which surface or portion of a surface to clean/treat and how to clean/treat the surface - or to which degree this cleaning/treatment is to be performed. In other situations, the task may be less strictly defined, such as bring parcel X from position A to position B, where the robot may itself decide how to get from position A to position B.

In many situations, a service provider and a client will make an agreement, often called a Service Level Agreement, specifying the service and parameters of that service. The SLA will define the service or tasks to a certain degree so that the parties may see whether the service/tasks is delivered in accordance with the agreement so that the service provider may be remunerated in accordance with the SLA. In this context, it is desired to be able to prove or indicate that the tasks have been performed. If a task has not been performed or has been partly performed, documentation for this may also be required, as it may affect the remuneration.

More precisely, the SLA may define a number of tasks to be performed and any further parameters thereof, such as a frequency of cleaning of a surface, a degree or quality of the cleaning of the surface, a time interval within which the surface should be cleaned, the maximum or minimum amount of time allowed for hauling a product, or the like. The service may be adapted to other parameters, such as other use of the surfaces or areas/paths in which the robot is to perform tasks. In some situations, cleaning is not desired within a period of time in which the surface is used by others. In hotels, cleaning of the lobby is not desired in peak hours and cleaning of rooms is not desired during the night. In airports, floor mopping may be desired at night or outside of peak hours, and for transport, some paths, roads or areas may be avoided during periods during which these are busy with other traffic.

Presently, preferably timing information is provided for at least one task but preferably a plurality of tasks or even all tasks, in accordance with which the task is desired performed or is to be performed. This timing information may be a maximum period of time or time interval spent on performing the task, an earliest point in time, such as a time of day, a date or the like, at which the task may be commenced, a latest point in time, such as a time of day or a date, at which the task must be completed, or the like. It may be logged whether each individual task is completed in accordance with its timing information. This may be used in the remuneration of the service provider.

Thus, for a task, a period of time may be agreed on during which the task must be performed, or a bonus system may be set up so that if the task is performed within the period of time, a larger bonus is awarded than if the task is performed or completed outside of the period of time. A penalty may be awarded if the task is not performed at all, not completed or performed outside of the bounds or parameters agreed to. An SLA may comprise an elaborate scheme of bonuses and penalties for different tasks, groups of tasks or all tasks. The robot or operator may operate to maximize the bonus, as the bonus may be correlated to the remuneration of the robot owner or service provider. A net value may be optimized where the bonuses, penalties and cost of consumables are taken into account.

Additional or alternative parameters may be defined for a task to fulfil or for the task to be completed. An expenditure of a consumable, such as power, cleaning fluid or the like may be tracked and compared to an allowed amount. Also or alternatively, a quality of a cleaning operation may be defined. If the task is not performed to that quality, the task may not be seen as completed, or a lower bonus may be awarded.

As mentioned, the descriptions and parameters may be provided in the robot or elsewhere. The robot has access to this data or part of it.

The robot will be operating and performing one or more of the tasks. At one point in time, the robot updates information relating to at least one of the tasks and/or one of the parameters. This updating may be the determination of information by the robot itself or the receipt by the robot of information from an external source. The update may comprise receiving new or updated information, which may relate to one or more parameters of one, more of or all of the remaining tasks.

Usually, the updated information will relate to or be relevant for tasks not yet completed, such as tasks which have not been commenced and potentially also tasks which have been partly completed. Thus, if first tasks have been completed, the updated information may relate to second tasks, none of which have been completed.

Having received the updated information, the robot derives, based on the updated information, an order of at least a first plurality of those of the plurality of tasks which are not yet completed and performs the first plurality of tasks in the order derived.

Naturally, the re-ordering may be of all remaining tasks or some of the tasks. A re-ordering means that at least two of the tasks are positioned at different positions in the order. The order is an order or sequence in which the robot will perform the tasks or expects to perform the tasks. Often, the robot will perform and complete a task at the time and then move on to the next task in the order, but in some situations, the robot will not complete a task, such as if prevented from doing so. Updated information may, for example, be caused by the robot being prevented from performing a task and thus deciding to discontinue the task. As a result thereof, the robot will have more time (time may be a parameter of the tasks), power, or another consumable, so that the tasks may be or can be performed in another order.

Preferably, the re-ordering of step d) is to an order in accordance to which more of the tasks, or preferred or predetermined tasks, are or may be completed according to their timing information. Thus, if the previous order would delay tasks with timing information too much, or at all, so that it or they cannot be completed in accordance with the pertaining timing information, the order may bring such task(s) to a position in the order in which the task may be completed in accordance with its timing information.

Thus, in one situation, the re-ordering makes it possible for more tasks to be performed in accordance with their timing information. In another or the same situation, some tasks may have a higher priority, so that the re-ordering is to an order in which the higher priority tasks are performed in accordance with their timing information.

The updating of information may be the addition of or removal of a task. This may require a re-ordering of the remaining task; especially if the added task itself has timing information which is desired complied with.

Another type of updating may be the receipt of altered timing information for a task already in the order of tasks.

In one situation, as mentioned, the updated or new information is derived by the robot. The robot may be equipped with one or more sensors for determining parameters or information from the robot itself.

Another parameter of the robot, which could also be taken into account, may be an amount of power or energy available for the robot to carry out its tasks. The robot may be provided with a battery or energy storage, such as a fuel container if the robot is provided with a fuel cell, combustion engine or the like. The robot may monitor the present state of the battery/storage or a remaining amount of power/energy available. This amount or state may be compared with an assumed or predicted amount of power/energy required to perform a remainder of the tasks in the service schedule.

This type of information may be updated by updating the amount of power/energy available. Also, if the service schedule is altered, such as if tasks are added, removed or re-ordered, the amount of energy/power required to carry out the tasks may be re-evaluated, again resulting in updated or altered information.

Clearly, the robot may have a task being a replenishing task where the robot replenishes the energy/power storage, such as charging a battery or replenishing a fuel container. The rearranging of the tasks may be performed to ensure that the replenishment tasks are positioned, in the order, at a position before the robot runs out of power/energy. The rearranging may be to bring forward in the order a replenishment task to ensure that the robot has enough power/energy to perform the tasks earlier in the order and still be able to reach and perform the replenishment task, where after the robot will have power/energy to provide all remaining tasks or the next tasks, if a later task is a new replenishment task.

If the robot has more energy/power than expected, tasks may be brought earlier in the order, compared to e.g. a replenishment task, and thus be performed earlier than according to the former order.

Naturally, a re-arranging of the tasks around a replenishment task, tasks may be re-arranged for other purposes, such as to reduce an amount of time or travel of the robot between neighbouring tasks in the service schedule. Thus, for example, if a new task is added, the task may be added in a selected position in the order, but the remaining tasks may also be re-ordered in order to comply as well as possible to the timing requirements and, potentially also to minimize the overall power consumption, travelling time or the like when performing the tasks in that order.

It is noted that in addition to the information on the state of a battery or fuel container or the power left in a battery or fuel left in a fuel container, information may be received or derived relating to the amount of power required to perform a task. A parameter of a task may be an amount of power/fuel required to perform the task. It is noted that this estimated amount of power/fuel may vary over time, such as depending on how dirty a surface is and thus how fast the robot may clean the surface, or what route the robot must take to complete the task. Also, a task may be a task to move the robot from one task to the next task. If the next task is altered to a different task, the power required to bring the robot to that task may change, if the distance between the present task and that task differs.

In one embodiment, the robot comprises a container for one or more consumables, where:
- step c) comprises determining a current amount of at least one of the consumables, where at least one parameter of the tasks relates to the at least one consumable and
- step d) comprises determining an order of the first plurality of tasks in which as many tasks as possible can be completed before the amount of the at least one consumable is depleted.

In this embodiment, the container may be a fuel container or battery, but the container may alternatively be a container for a consumable used during operation and performance of a task, such as a cleaning fluid, or a container for a material collected during operation and performance of a task, such as a waste container. Thus, the consumable may be spent either by reducing the amount of the consumable, where a lowest limit exists, or by increasing it toward a highest limit.

It is noted that the task may have as a parameter the amount of the consumable estimated to be used or consumed by the task. Some tasks may not consume any of that consumable, such as could be the situation where the consumable is a cleaning fluid and the task merely requires the robot moving from A to B.

Clearly, multiple consumables may be consumed during operation, such as both cleaning fluid, waste space and power, so that the re-ordering may take all such consumables into account and perhaps derive an order in which as many tasks as possible are performed without or before depleting any of the consumables. A lowest or highest limit of the or each consumable may be set to prevent, at least under normal operation, the robot from being completely depleted of the consumable.

The above-mentioned replenishment task may be a replenishment of one consumable, multiple consumables or all consumables. Thus, a replenishment may both a charging of a battery, replenishment of a cleaning fluid and an emptying of a waste container.

Instead of having step d) determine an order in which as many tasks as possible are performed before depletion, the tasks may be re-ordered to ensure that more important tasks are performed before depletion. The tasks may have a parameter relating to a level of importance. Then, when the updated information is received, the tasks may be re-ordered to e.g. have as many high priority tasks performed early or e.g. before a replenishment task.

In one situation:
- step d) comprises providing in the order, a number of the tasks of the first plurality of tasks, which are provided along a route from a present position of the robot to a replenishment station, where the tasks of the number of the tasks may be performed while consuming no more than the current amount of the at least one consumable,
- step e) comprises performing the number of the tasks in the order determined, then replenishing the at least one consumable at the replenishment station, and then performing a remainder of the first plurality of tasks in the order determined.

In this situation, the robot has a replenishment task to be performed at the replenishment station. Then the robot may plan a route between its present position and to the replenishment station and perform any or all tasks, or at least tasks for which there is consumable, on its way to the replenishment station.

In one embodiment, for at least one task, the timing information is a time slot within which the pertaining task must be performed, and wherein:
- step c) comprises determining that a present task will be completed earlier than estimated and
- step d) comprises re-ordering the tasks to bring a task later in the order to an earlier position in the order.

In that or another embodiment, for at least one task, the timing information is a time slot within which the pertaining task must be performed, and wherein:
- step c) comprises determining that a present task will be completed later than estimated and
- step d) comprises re-ordering the tasks to bring a task earlier in the order to a later position in the order.

A task may be performed swifter or more slowly depending on a number of factors. The moving speed of a robot may depend on a number of factors, such as how fast a task performed may be performed. If e.g. a floor is less dirty than expected, a floor cleaning robot may travel faster and thus finalize the task earlier than expected. On the other hand, any movement, such as transport, may be hindered or delayed by obstacles requiring the robot to travel along another route or travel slower. That task usually would be finalized later than expected.

That the task will be completed earlier or later may be determined based on a number of parameters, such as a speed of travel of the robot during the already completed portions of the task, a rate of consumption of a consumable of the already completed portions a degree to which the robot is prevented or delayed in its performance of the task.

The robot may comprise one or more detectors for assisting the robot in the performing of the task. That detector or those detectors may additionally or alternatively be used for determining a parameter or estimating a parameter of a task. A detector may relate to the present state of energy or energy consumption of the robot. A detector may relate to a present remaining amount of consumable or a rate of consumption of consumable. A rate of consumption may be pre-programmed for a task, such as a rate of cleaning fluid used on a surface. Rougher surfaces usually will require more liquid than smooth surfaces. The rate of consumption may, however, vary such as depending on a degree or amount of dirt on the surface. Thus, this rate of consumption may be used for estimating a complete amount of consumable used by the present task. This may then be used as the updated information, as a remaining amount of consumable may be different than what was expected.

Other detectors may be used for the robot to move and navigate. Such detectors may assist the robot in determining its position and/or detect infrastructure or obstacles in the robot's way. The robot may have a standard robotic navigation system comprising e.g. a map or the like so that the robot may determine its position in the map and/or in the venue or scene or area where the present task is to be performed. Such sensors may then detect obstacles which the robot is required to move around. The presence of such an obstacle and the position, size, number, type or concentration thereof may be used in the robot's determination of how long it will take to complete the task. Actually, as will be described below, the robot may decide to abandon or discontinue the present task. This discontinuation may be based on information received from the detector(s), such as due to there being too many or too large obstacles or obstacles of a particular type are present. It may be decided to discontinue the task if e.g. more than 10% of the task cannot be performed, such as if more than 10% of a floor cannot be cleaned. Additionally, or alternatively, it may be decided to discontinue a task if the obstacles are of a particular type, such as liquid on the floor or the obstacles being persons.

As mentioned above, in general, a parameter of a task or a plurality of the tasks may relate to time. The parameter may relate to a period of time which the task is estimated to take. Alternatively, or additionally, a parameter may relate to a period of time within which the task must be performed or may not be performed. As mentioned above, tasks may be preferably be performed within specified times of day, such as in the evening, before noon or the like. Bonuses or penalties may be awarded if the robot fails to perform the task within or outside a specified period of time.

In such situations, the order of the tasks may be defined according to such periods of time, so that as many as possible of the tasks are performed within or outside of the respective periods of time. If the robot is ahead of schedule, a later task may be moved forward in the order. If the robot is behind schedule, a task may be selected and provided later in the order to have other tasks performed before it.

A level of importance may be added, so that the most important tasks are performed as desired and less important tasks may be performed outside of the time intervals in question. Clearly, this may be taken into account in the order together with the above power and consumable considerations.

In one embodiment:
- step c) comprises the robot discontinuing a present task and
- step d) comprises re-ordering the tasks to bring a task later in the order to an earlier position in the order and to add a remainder of the present task to a position later in the order.

The robot may discontinue the present task for a number of reasons. One reason may be that the robot is prevented from performing the task, such as if obstacles prevent the robot from performing the task. A vacuuming robot would also be prevented from vacuuming a floor, if the floor was e.g. wet. The robot may detect this and base the determination to discontinue the task thereon. Then, step c) could comprise one or more sensors of the robot sensing one or more parameters of surroundings of the robot and discontinuing a present task based on the one or more parameters sensed.

Alternatively, the robot may decide that if the present task was finalized, there would be too little time, power or other consumable left to perform the next tasks. If such next tasks were more important, the discontinuing of the present task may result in the most important tasks being performed first.

The robot may store information relating to a remainder of that task and define a new task relating to that remainder of the interrupted task. The robot may then add this new task to the service schedule. The position of this new task may be determined based on any of the above or below considerations.

The re-ordering may generally be performed as a two-step process in which a first step may comprise selecting a plurality of tasks which can be performed within their timing information. If possible, additional tasks may be selected. It may also be desired to select tasks for which there is consumable. Thus, the selection may be of the most important or time critical tasks. Then, a second step may be determination of a route from the robot's present position through positions of the selected tasks and to a replenishment station. In another situation, a route may be defined, where after tasks are selected based on their positions via-a-vis the route.

In that or another embodiment, the updated or new information may stem from outside of the robot. The information may be received from external sensors or sources. Thus, in one embodiment:
- step c) comprises the robot receiving information from a remote source, the information identifying a task which is to be performed urgently, to be delayed or to not be performed and
- step d) comprises re-ordering the tasks by removing the identified task or bringing the identified task to a position later in the order.

As mentioned above, the reaction to the updated information may be any type of re-ordering, such as a re-ordering of the same tasks, the addition of a task or removal of a task as well as the discontinuing of a task.

The information may stem from a large number of sources, such as environmental detectors aimed at or provided in a scene or venue in which one or more of the tasks is performed or is to be performed. Such detectors may detect surface parameters, occupancy parameters, obstacle parameters or the like, so that information may be derived as to whether the robot would be able to or recommended to perform the task in the venue or space. It may be desired to postpone or discontinue a task if a floor or ground surface has characteristics not suitable for the robot, such as if the ground or floor is icy, wet, dirty or the like. For this use, temperature sensors, cameras, or the like may be used.

Alternatively, if the venue or space is too crowded, such as by persons, luggage, other robots, goods or the like, it may be decided to postpone or discontinue the task. Cameras, lidars or the like may detect obstacles or persons. A task may be postponed or discontinued if the robot is not able to perform the task to a desired degree, such as if the robot is not able to move to or over more than 20%, such as more than 40%, such as more than 60%, such as more than 80%, such as more than 90% of the surface of the area or venue. Thus, if too many obstacles are present, the robot may be directed to other tasks. In addition, the mere positions of obstacles may be a factor, such as if these block off a portion of the area or scene or if they block the path of the robot moving to another task. In that situation, the robot may discontinue that task or postpone it to a later point in time where it is hoped or estimated that the blockage is no longer there.

Persons or the density or number of persons may be determined based on thermal cameras, proximity sensors, microphones sensing noise level, door sensors or even air quality parameters, such as the amount of CO₂ in the area or space. In fact, parameters of a ventilation system may be used in this respect, as the ventilation speed or flow may be controlled by a CO₂ content in the air removed, so that the ventilation speed or flow may be an indication of the amount of persons in the area of venue.

Clearly, the re-ordering may also be a bringing forward of a task in the order, if a corresponding area or venue becomes accessible and if this is advantageous in view of the tasks timing information.

Other types of information may be used which are not obtained in or at the scene or venue of one or more tasks.

Weather information may be used for assuming or predicting parameters of a scene or area of a task, such as floor parameters. If rain is expected, a wet floor may be predicted. A floor vacuuming robot may take this as an information to not go to that area during a period of time where the floor is expected to be wet. A floor mopping robot could take it as an indication to go to that area to clean the floor.

Traffic information may be used to indicate occupancy of persons of an area or venue.

Even a booking system of a hotel, for example, may indicate whether and when a room is expected to be occupied. This information may also indicate a degree of occupancy of an aisle of a hotel, depending on the degree of occupancy of the rooms of the aisle. The booking system may also relate to meeting rooms and the like.

As rooms may be booked and unbooked with short notice, updated information may be forwarded to the robot, so that the robot may adapt to altered booking situations.

Transport robots may use the information on occupancy/blocking and ground/surface conditions to select suitable routes for the transport.

Cleaning robots may avoid cleaning in rooms where persons are present. Disinfecting robots may require no presence of persons, such as if disinfecting with radiation or chemicals.

Clearly, information stemming from the robot and information stemming from outside of the robot may be combined in the determination resulting in the re-ordering. Again, different tasks may have different levels of importance which may aid in the decision of whether to, and if so how, to reorder the tasks.

A second aspect of the invention relates to a self-propelled robot comprising a controller configured to control the robot to:
a) receive or access a service schedule identifying a plurality of tasks for the robot to perform, each task comprising one or more parameters in accordance with which the task is to be performed,
b) complete one or more of the plurality of tasks,
c) update information relating to at least one of the tasks and/or one of the parameters,
d) derive, based on the updated information, a, usually new or different, order of at least a first plurality of those of the plurality of tasks which are not yet completed and
e) perform the first plurality of tasks in the order derived.

Clearly, all embodiments, situations and considerations of the first aspect of the invention may be equally relevant in relation to the present aspect of the invention.

As mentioned above, the parameter(s) of the task(s) preferably is timing information in accordance with which the task is to be performed or completed.

The service schedule may be formed by information stored in a storage, such as a RAM, flash memory, hard drive, or other storage in the robot. Alternatively, the information may be provided outside of the robot, such as at or in a remote controller with which the robot is configured to communicate, preferably wirelessly.

The service schedule may be received from an external source, wirelessly or via wires, such as a remote control, pc, pad, tablet, mobile phone, server or the like. The robot may comprise an antenna, plug, connector, user interface or the like for receiving the service schedule. Alternatively, the service schedule may be entered directly in the robot via a user interface.

The robot is configured to perform the tasks and is self-propelled. Thus, the robot preferably comprises a power source, if not connected to an external power source, as well as one or motors or drives configured to propel the robot. The robot may drive, roll or move along a surface and/or may fly or swim/sail/dive if desired.

The self-propelling may be controlled or guided by one or more sensors configured to detect structures, such as walls, furniture or the like but also unexpected obstacles such as persons, luggage or the like. Self-propelled robots may be guided based on infrastructure, as is described above, or may comprise not only a range of position/obstacle sensors but also information representing a map of the area in which the robot is to operate, so that the robot may ascertain its position in the area and correlate this to its operation.

In addition to the means required for the robot to be self-propelled, the robot may comprise means enabling it to perform the tasks. A variety of tasks are described above. Robots are often built to perform specific tasks, such as cleaning tasks, monitoring tasks, transport tasks or inspection tasks. Robots may, naturally, comprise means for performing multiple tasks. A cleaning robot will comprise suitable cleaning means, such as a vacuuming device, a scrubber device, a mopping device or the like. An inspection robot may comprise suitable inspection means such as detectors, sensors, cameras or the like. A transport robot may comprise a cargo hold or surface for receiving the product or cargo to be transported.

Naturally, the robot may be selected or equipped to handle the tasks at hand.

The controller may be any type of controller, such as a processor, controller, ASIC, DSP, FPGA, software controlled or hardwired. The controller may be monolithic, or multiple units may perform the operation. Part of the controlling, such as the determination, may be performed in the robot, in a nearby processor, such as if fog computing is used, or in a remote controller, such as if cloud computing is used. Any combination of such units may be used, and if multiple units are used, these units preferably are configured to communicate with each other. The above-mentioned storage may be provided in or at the controller and may be configured to communicate with the controller. The controller may be provided in the robot or outside of the robot.

The tasks and the parameters may be as described above.

The parameter(s) of a task may indicate when a task is performed or what is required for the task to be performed or completed. The completion of a task may be determined by the controller before the robot is allowed to commence to or on another task.

The updating of the information may be performed, as is described above, based on sensor information from sensors or detectors of the robot or based on information received from outside of the robot. The information may relate to one or more tasks, an area or venue in which a task is being performed or is to be performed, to predicted or estimated parameters of the robot, other tasks or the like.

The reordering and the reasons therefor may be as described above. The reordering may be reflected in a storage of the robot to be retrievable if desired.

In one embodiment, the robot comprises a container for one or more consumables, where the controller is configured to have:
- step c) comprise determining a current amount of at least one of the consumables, where at least one parameter of the tasks relates to the at least one consumable and
- step d) comprise determining an order of the first plurality of tasks in which as many tasks as possible can be completed before the amount of the at least one consumable is depleted.

The robot may comprise a storage or hold for the power or consumable. The robot may track or log the present amount of and/or expenditure of the time, power or consumable during performing of individual tasks. The consumption of a cleaning fluid, for example, would depend on e.g. the area required to be cleaned as well as how dirty it is. Consumption of or filling-up of a waste space could also depend on the area as well as how dirty that area is.

This tracking may be used to arrive at an estimated expenditure of time/power/consumable required to revert to and complete the task. In addition, the tracking may be used to determine whether there is sufficient consumable to perform all other desired tasks. The reordering may then be performed to ensure that the most desired tasks are performed within the amount of consumable available.

It is noted that not all tasks may require consumable. For example, a cleaning fluid is not used if the robot transports itself between areas to be cleaned.

In one situation, the controller is configured to have:
- step d) comprise providing, in the order, a number of the tasks of the first plurality of tasks, which are provided along a route from a present position of the robot to a replenishment station, where the tasks of the number of the tasks may be performed consuming no more than the current amount of the at least one consumable,
- step e) comprise performing the number of the tasks in the order determined, then replenishing the at least one consumable at the replenishment station, and then performing a remainder of the first plurality of tasks in the order determined.

In this context, the robot is capable of having the consumable replenished. In one situation, the consumable is a fluid which is consumed during operation of at least one task, such as water, gas, cleaning fluid or the like. Then, the robot is capable or having a container for that fluid replenished. Then, the robot may also comprise a gauge or detector for determining a remaining amount of the fluid in the container or a rate of consumption thereof.

In another situation, the consumable is a space or container which is filled, or which receives fluid, solid matter or the like during operation of the task, such as a waste container collecting waste from a vacuuming unit, a suction unit or the like. In this situation, the robot may be capable of emptying this container. Also, the robot may comprise a detector or gauge for determining a present amount of waste or remaining space in that container.

The replenishment station may be configured to engage the robot and/or the container in order to replenish the container or receive fluid or solid material therefrom.

The replenishment station may additionally be configured to recharge a battery of the robot.

In one embodiment, for at least one task, the timing information is a time slot within which the pertaining task must be performed, and wherein the controller is configured to have:
- step c) comprise determining that a present task will be completed earlier than estimated and
- step d) comprise re-ordering the tasks to bring a task later in the order to an earlier position in the order.

In that or another embodiment, for at least one task, the timing information is a time slot within which the pertaining task must be performed, and wherein the controller is configured to have:
- step c) comprise determining that a present task will be completed later than estimated and
- step d) comprise re-ordering the tasks to bring a task earlier in the order to a later position in the order.

Thus, the robot may comprise a clock or means for receiving a clock signal, such as from the internet, the GSM network or an external clock. The robot may alternatively comprise an internal clock. The controller may use the point in time derived from such clock or clock signal and compare it to a timing schedule in which the present point in time may be compared to periods of time which individual tasks are assumed or predicted to consume and optionally points in time or periods in time before, within or after which the individual tasks are preferably performed.

In one embodiment, the controller is configured to have:
- step c) comprise the robot discontinuing a present task and
- step d) comprise re-ordering the tasks to bring a task later in the order to an earlier position in the order and optionally to add a remainder of the present task to a position later in the order.

Above, a number of reasons are mentioned for discontinuing the task. Some reasons are based on output from detectors of the robot, such as if an excessive amount of obstacles are detected. In another situation, the discontinuing is based on a lack of consumable. In yet another situation, the discontinuing is based on information received from outside of the robot.

In one embodiment, the controller is configured to have:
- step c) comprise one or more sensors of the robot sensing one or more parameters of surroundings of the robot and
- step d) comprise re-ordering the tasks to bring a task later in the order to an earlier position in the order and to add a remainder of the present task to a position later in the order.

As mentioned above, the sensors may detect obstacles, surface characteristics, degree of cleanliness or dirt or the like. A large number of detector types exist which are able to determine such information, such as cameras, LIDAR, RADAR, proximity sensors, gas sensors, microphones, surface sensors, dirt sensors, or the like.

In one embodiment, the controller is configured to have:
- step c) comprise the robot receiving information from a remote source, the information identifying a task which is to be performed urgently, a task to be delayed and/or a task to not be performed and
- step d) comprise re-ordering the tasks by removing the identified task or bringing the identified task to a position earlier or later in the order.

In this context, the robot may comprise means for receiving the information, such as antennas, connectors or the like.

The remote source may be any type of computer, pc, server, mobile phone, tablet, remote control or the like. The remote source may collect sensor or detector data from sensors or detectors provided in an area or space in which one or more of the tasks are to be performed.

In addition, or alternatively, the remote source may be communicating with a number of other sources, such as meteorological services, traffic services, booking services or the like.

Then, the sensor or detector data and/or information may be collected and correlated to e.g. individual tasks of the service schedule of the robot. If a parameter of a task changes based on that information, the updated information may be fed to the robot.

Technologies related to the present invention may be found in the Applicants co-pending applications filed on even date and with the titles "A METHOD OF CONTROLLING A ROBOT IN RELATION TO A SERVICE SCHEDULE" and "A METHOD OF OPERATING ONE OR MORE ROBOTS" which are incorporated herein by reference.

In the following, preferred embodiments are described with reference to the drawing, wherein:
- Figure 1 illustrates a hotel in which a robot is working,
- Figure 2 illustrates a cleaning robot.

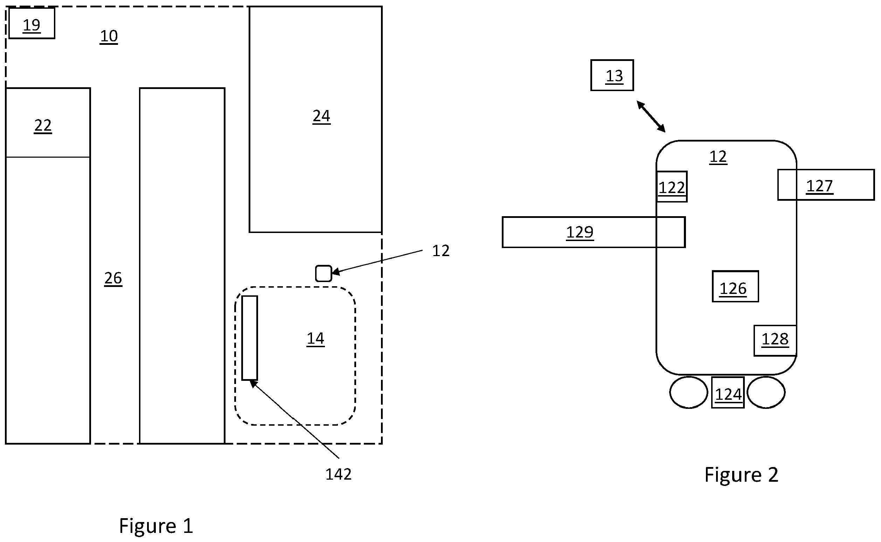

In figure 1, an example embodiment of a robot in its working space. In this example, the working space is a hotel 10 in which the robot 12 operates, such as for cleaning, disinfecting, quality checking, delivering supplies or amenities and the like. The hotel has a reception desk 142 in a reception area 14 as well as a number of rooms 22, an aisle 26 and a grand ballroom 24.

The robot 12 may have fixed tasks such as floor cleaning in the reception area 14 and the aisle 26 as well as, or alternatively, disinfecting walls, handrails, tabletops, chairs and the like. The robot 12 may also or alternatively be called for to move supplies, such as fresh towels, from a central storage to local storages close to the rooms 22 or directly to the rooms. In addition, or alternatively, the robot may be called for to do specific tasks, such as bringing amenities, such as snacks, from the reception 142 or a bar/restaurant to an occupant of a room 22.

In figure 2, a robot 12 is seen having a controller 126, sensors 122 for detecting e.g. obstructions and other elements for navigating, a cleaning element 124 for, in this situation, cleaning floors, a sensor 128 for detecting the cleanliness of the cleaned floor and, optionally or additionally, an arm 129 comprising an irradiating element for irradiating surfaces, such as table tops, with radiation killing bacteria and viruses.

Clearly, this situation of a hotel may be expanded or transferred to any other setting, such as an airport, a storage facility, a shop, a house, a building, a town, a city, a field or the like. Depending on the setting, the tasks of the robot may change. Clearly, different robots may have different capabilities, different sensors, actuators, interface elements and the like. A delivery in a hotel may be towels, where in an airport it may be tax free goods for a store. In a storage facility or shop, it may be products or parcels, where in a town or city it may be any type of products, such as groceries, fast food, take-away or the like. In a field, a delivery may be fertilizer or weeding agents.

The cleaning schedule of the robot may comprise fixed tasks at fixed points in time or with fixed intervals, such as the sweeping or washing of the floor in the reception area three times each day and in the aisle twice a day, where each room must be vacuumed once each day. Rooms are often vacated in the middle of the day, so that this is the preferred period of time for vacuuming the rooms. On the other hand, the aisle may be the busiest in the morning and late afternoon, so that it may be desired to not clean there in these time intervals.

The reception is the busiest in the morning for checking out and in the afternoon for the arrival of new guests. The reception may be very busy at specific, other points in time, such as when the grand ballroom is rented for an event, such as a wedding. Outside of such events, the grand ballroom may be vacated for days, so that the cleaning thereof may be more sporadic, such as before and after an event but perhaps not that time critical.

A cleaning operation often will be decided on or ordered as an operation with a particular goal, such as vacuuming of the complete floor of an aisle. It is desirable that the robot logs its operations so that compliance with the operation or task may be proved. However, the robot may not be able to complete the task.

Different reasons exist for not completing a task. The robot may be directly prevented from completing the task. Alternatively, the robot may not be able to complete the task, such as if the robot is running out of power or a consumable required to perform the task. Also, the task may have to be performed within certain parameters, such as within a predetermined time interval, so that the task, even when all required activities are performed, is not completed within the required parameters.

A robot may be prevented from performing a task for a number of reasons. If the robot is cleaning a floor, luggage, goods or persons may be in the way, so that the robot will have to move around the luggage etc. and clean portions of the floor which are available to it. Then, the robot is prevented from cleaning a portion of the floor. Alternatively, obstacles may exist which prevent the robot from reaching the area in which the task is to be performed.

The robot will then output information to this effect. This information may comprise sensor data, such as an image, illustrating or proving the obstacle(s) preventing the robot from performing the task. The robot may also output information relating to the particular task showing that there was a good reason for not cleaning that portion. The robot will then perform other tasks of its service schedule.

The robot may then deliver a report describing the area cleaned, the area not cleaned and the reasons therefor. In one example, the service provider may not lose a bonus, if the reason for not completing a task is not due to the service provider.

If the robot did not complete the task due to one or more parameters of the task not being met, corresponding information may be stored relating to such parameters, such as the parameter with which the task was performed.

A parameter may be a period of time within which a task is to be performed. As described above, cleaning may be desired performed within predetermined time periods or outside of certain time periods. It may be desired that a task is finalized at a certain point in time or is not initiated before a certain point in time.

Thus, if the robot performs the task but outside of the allowed time period, the task may be seen as not completed.

The report may be combined with an agreed-on set of tasks for the robot, so that discrepancies may be seen. The agreed-on set of tasks may form a Service Level Agreement specifying the individual tasks and any parameters thereof. A bonus for performing the tasks - or each task - may be defined, as may a penalty for not performing a task or not performing the task within the required parameter(s). When a task is defined by a parameter, the bonus or penalty may be defined on the basis of this parameter. If the parameter is time, such as a latest point in time of completing an action of a task, a delay of performing an action may incur a higher penalty if the delay is larger.

Then, if the robot has been prevented physically from cleaning a portion, for example, of a floor, the robot may revert to that area at a later point in time in order to attempt again to clean it. It may be possible to clean the area within the allocated time, for example, so that the task is no longer not-completed. Alternatively, it may be possible to perform the task with a tolerable delay so that, for example, a penalty becomes lower or acceptable. If the area is still occupied, corresponding information may be generated.

Other parameters may relate to a consumption, speed, quality or other parameter of the robot while performing the task. A consumption, such as a consumption of power or other consumables, such as cleansing agents, may be monitored. If the consumption exceeds a maximum limit for the task, the task may be assumed not completed.

Another parameter may be a position, so that if the task is not performed at a desired position, the task may be seen as not completed.

Yet another parameter may be a quality of an operation defined by the task. The task may be a cleansing action, such as by the means 124, where the quality has to do with how clean the surface or element is after the cleansing. If the surface or element is still too dirty, the task may be seen as not completed. A cleansing task may be a sweeping, mopping, washing and/or vacuuming of a floor or other surface and/or a disinfecting of a surface. Thus, the robot may comprise one or more sensors 128 for determining this parameter or multiple parameters of the operation of the cleansing means 124. This documentation may be used for determining whether the task has been completed or not.

Similarly, if the task is a disinfection of a surface, the intensity or quality of the disinfection may be monitored and compared to set parameters. The intensity may be that of disinfecting radiation or the amount of dispensed disinfecting fluid and/or the speed of movement of the robot vis-à-vis the surface.

Another parameter may relate to the operation of the robot. In one situation, where the task is a scrubbing of a floor, a parameter may be set for a force exerted on the floor by the scrub deck. A too low force may not clean the surface sufficiently, and a too large force may wear the floor unnecessarily. Thus, this force may be determined using a sensor and logged. If the parameter setting is not observed during the performing of the task, the task may be seen as not completed.

The robot preferably is self-propelled in a manner so that it may perform the tasks without human intervention. Additionally, it may be desired that the robot is so intelligent that it may not only perform the tasks required but may deviate from tasks or even re-arrange their order. The robot may comprise sensors 122 allowing the robot to move autonomously such as by detecting obstacles and/or being able to navigate in a space, such as on the basis of a map of the space, as is known.

The robot, or the controller 126, may be configured to communicate with an external controller 13, from where a list of one or more tasks, which may be called a service schedule, may be received together with, if desired, particular parameters for one or more tasks as described above.

The robot may then perform the tasks in the determined order. The robot or controller may log its performance and the progress with individual tasks, such as sensor data or parameters determined during the performing of individual tasks.

The robot may then determine if a task is completed or not. Alternatively, the data may be fed to the controller 13 which may perform that determination. If the robot determines that a task cannot be completed, such as if the robot is blocked or otherwise prevented from performing or completing a task, the robot may feed such information, such as the information it bases this determination on, to the controller 13.

The controller 13 or the controller 126 may in some circumstances re-arrange any remaining tasks in order to have as many tasks performed as possible. For each task, one or more parameters may be defined, according to which the tasks are to be performed. Such parameters may be time or consumption of a consumable, so that the sequence of the remaining tasks may be defined according to the time at which each task may be initiated, must be finalized, or the like. Some tasks may be acceptably performed later than others, for example, so that a rearranging may be desirable. Also, one of the controllers may direct the robot to perform a task which was earlier not completed.

Tasks may be rather different from each other. One task may be a cleansing action and another task may be a charging of the robot. Thus, if more energy has been spent than expected, the charging task may be moved forward in time to allow the robot to charge sufficiently so that the remainder of the tasks may be performed. A task may also be an emptying of a waste container, restocking of cleansing fluid or the like.

In a particular example, the robot may further comprise operator engaging means 127 for a human operator to engage and control the robot. The robot may comprise a surface for an operator to stand or sit on and handles for the operator to hold and for use to guide the robot. Thus, an operator may engage such means and thereby overrule the operation of the robot. This will also prevent the robot from performing the task at hand or the next task. The operation may then control the robot to perform e.g. an urgent task and may then release the robot for the robot to revert to the remaining tasks. The robot will then output information as to the operator's overriding as information relating to the task which the robot was prevented from performing. Clearly, alternatively, the robot may be remote controllable, whereby the overriding may again be determined and logged.

The robot may continuously monitor its performance and how far it has gotten in the service schedule. The robot may use this information for adapting the service schedule. For example, a period of time may be estimated for the performing and completing of a task. However, sometimes the robot may be swifter, such as if less obstacles are in the way or if the surface is cleaner than expected. In other situations, the robot may have to operate more slowly, so that more time is used.

The robot may monitor this and rearrange the remaining tasks in accordance therewith. If the robot is ahead of schedule, it may bring a task later in the order to be performed earlier, if this, for example, does not delay the tasks formerly scheduled prior to that task too much. If the robot is running late, a task may be selected and removed from the service schedule or order or it may be postponed to later in the order.

Also, the robot may monitor a present state of a consumable, such as power, cleaning fluid, waste space or the like. If the expenditure thereof is more than expected, the robot may have to revert to a replenishment station 19 for replenishment of the consumable. The robot may then select one or more tasks which are to be performed in areas on the route to the replenishment station and which may be performed within the consumable yet available. Then, the order is rearranged to put such tasks earlier in the order, so that the robot will perform these tasks and thus approach the replenishment station. The robot may then replenish the consumable and revert to the remaining tasks.

Alternatively, or additionally, the robot may receive other information from the external controller 13, such as updated parameters of tasks or information identifying tasks to no longer be performed or tasks which are to be delayed or performed more urgently.

In one example, the external controller has access to a room booking system of a hotel. Rooms are often booked and unbooked, so that the occupancy of a room may change swiftly. The same is the situation for meeting rooms, conference rooms and the like. Thus, if a task relates to a room, the booking situation of which changes, the robot may be informed accordingly. In an airport, airplane delays and gate changes will also greatly affect the occupancy of different areas in the airport.

If the room becomes booked but requires cleaning, the robot may be informed of the booking and the task may be provided with a time interval parameter indicating that the room must be cleaned within a short time period. The robot may then rearrange the tasks and put this new task ahead of or early in the order of tasks. If the cleaning of the room was already a task, the reordering would be to move that task to earlier in the order.

Alternatively, if a task is vacuuming of a lobby and the weather report indicates immediate rain, this task may be postponed until after the rain has stopped to allow the lobby floor to dry out before vacuuming.

Correspondingly, if a room is unbooked, swift cleaning thereof may not be required. The robot may receive information indicating that that task may be performed within a later or longer time period or need not be performed at all. Then, the robot may decide to reorder the tasks and move that task to further down in the order, or the task may be removed altogether.

Other types of information may relate to occupancy or other parameters making the performance of a task more difficult, time consuming or not desired. If a room is occupied with many people or other obstacles, the robot may receive such information and then postpone or avoid performing that task. If a room or space becomes vacant before expected, the robot may on the other hand decide to clean it earlier

Then, in general, the external processor may be another system of the area or scene, such as a hotel, an airport, a super market or the like, which may comprise information relating to occupancy, degree of cleaning required, or the like of individual areas or portions each related to a task, whereby the robot may adapt its order of tasks to such updated information.

It is noted that some tasks may be transport tasks and others may relate to other operations, such as cleaning. Thus, when a cleaning task has been completed, a transport task may be performed bringing the robot to a portion or area where a next cleaning task is to be performed. Different tasks may then be connected to different parameters. A transport task may be represented by a time estimate and a power consumption where a cleaning task may be represented by a time estimate, a power consumption and a consumption of one or more consumables. Then, information may be received relating to a transport task, such as that the path in question may be blocked or otherwise not desired used. The robot may then decide to either perform another task bringing the robot, such as along a different route, to the next cleaning task, or the robot may decide to rearrange tasks and thus perform also the cleaning tasks in another order. Bringing the robot to the beforementioned cleaning task may take too long or may require too much power, so that the robot may rearrange the tasks and thus postpone the beforementioned cleaning task until later.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

For purposes of interpreting the claims, it is expressly intended that the provisions of 35 U.S.C. § 112(f) are not to be invoked unless the specific terms "means for" or "step for" are recited in a claim.

In one or more examples, the described techniques may be implemented in hardware, software, firmware, or any combination thereof. If implemented in software, the functions may be stored as one or more instructions or code on a computer-readable medium and executed by a hardware-based processing unit. Computer-readable media may include non-transitory computer-readable media, which corresponds to a tangible medium such as data storage media (e.g., RAM, ROM, EEPROM, flash memory, or any other medium that can be used to store desired program code in the form of instructions or data structures and that can be accessed by a computer).

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor" as used herein may refer to any of the foregoing structure or any other physical structure suitable for implementation of the described techniques. Also, the techniques could be fully implemented in one or more circuits or logic elements.

## Claims

1. A method of controlling a robot, the method comprising:
a) feeding a service schedule to a self-propelled robot, the service schedule identifying a plurality of tasks for the robot to perform, at least one task comprising timing information in accordance with which the task is to be performed,
b) the robot completing one or more of the plurality of tasks,
c) the robot updating information relating to at least one of the tasks,
d) deriving, based on the updated information, an order of at least a first plurality of those of the plurality of tasks which are not yet completed and
e) performing the first plurality of tasks in the order derived.

2. A method according to claim 1, wherein step d) comprising deriving an order in which more task are completed within their respective timing information.

3. A method according to claim 2, wherein:
- step d) comprises providing in the order, a number of the tasks of the first plurality of tasks, which are provided along a route from a present position of the robot to a replenishment station, where the tasks of the number of the tasks may be performed while consuming no more than the current amount of the at least one consumable,
- step e) comprises performing the number of the tasks in the order determined, then replenishing the at least one consumable at the replenishment station, and then performing a remainder of the first plurality of tasks in the order determined.

4. A method according to any of the preceding claims, wherein, for at least one task, the timing information is a time slot within which the pertaining task must be performed, and wherein:
- step c) comprises determining that a present task will be completed earlier than estimated and
- step d) comprises re-ordering the tasks to bring a task later in the order to an earlier position in the order.

5. A method according to any of the preceding claims, wherein, for at least one task, the timing information is a time slot within which the pertaining task must be performed, and wherein:
- step c) comprises determining that a present task will be completed later than estimated and
- step d) comprises re-ordering the tasks to bring a task earlier in the order to a later position in the order.

6. A method according to any of the preceding claims, wherein:
- step c) comprises the robot discontinuing a present task and
- step d) comprises re-ordering the tasks to bring a task later in the order to an earlier position in the order and to add a remainder of the present task to a position later in the order.

7. A method according to claim 6, wherein step c) comprises one or more sensors of the robot sensing one or more parameters of surroundings of the robot and discontinuing a present task based on the one or more parameters sensed.

8. A method according to any of the preceding claims, wherein:
- step c) comprises the robot receiving information from a remote source, the information identifying a task which is to be performed urgently, to be delayed or to not be performed and
- step d) comprises re-ordering the tasks by removing the identified task or bringing the identified task to a position earlier or later in the order.

9. A robot comprising a controller configured to control the robot to:
a) receive or access a service schedule identifying a plurality of tasks for the robot to perform, each task comprising timing information in accordance with which the task is to be performed,
b) complete one or more of the plurality of tasks,
c) update information relating to at least one of the tasks,
d) derive, based on the updated information, an order of at least a first plurality of those of the plurality of tasks which are not yet completed and
e) perform the first plurality of tasks in the order derived.

10. A robot according to claim 9, wherein the robot comprises a container for one or more consumables, where the controller is configured to have:
- step c) comprise determining a current amount of at least one of the consumables, where at least one parameter of the tasks relates to the at least one consumable and
- step d) comprise determining an order of the first plurality of tasks in which as many tasks as possible can be completed before the amount of the at least one consumable is depleted.

11. A robot according to claim 10, wherein the controller is configured to have:
- step d) comprise providing, in the order, a number of the tasks of the first plurality of tasks, which are provided along a route from a present position of the robot to a replenishment station, where each of the number of the tasks may be performed consuming no more than the current amount of the at least one consumable,
- step e) comprise performing the number of the tasks in the order determined, then replenishing the at least one consumable at the replenishment station, and then performing a remainder of the first plurality of tasks in the order determined.

12. A robot according to any of claims 9-11, wherein, for at least one task, the timing information is a time slot within which the pertaining task must be performed, and wherein the controller is configured to have:
- step c) comprise determining that a present task will be completed earlier than estimated and
- step d) comprise re-ordering the tasks to bring a task later in the order to an earlier position in the order.

13. A robot according to any of claims 9-12, wherein, for at least one task, the timing information is a time slot within which the pertaining task must be performed, and wherein the controller is configured to have:
- step c) comprise determining that a present task will be completed later than estimated and
- step d) comprise re-ordering the tasks to bring a task earlier in the order to a later position in the order.

14. A robot according to any of claims 9-13, wherein the controller is configured to have:
- step c) comprise the robot discontinuing a present task and
- step d) comprise re-ordering the tasks to bring a task later in the order to an earlier position in the order and to add a remainder of the present task to a position later in the order.

15. A robot according to any of claims 9-14, wherein the controller is configured to have:
- step c) comprise one or more sensors of the robot sensing one or more parameters of surroundings of the robot and
- step d) comprise re-ordering the tasks to bring a task later in the order to an earlier position in the order and to add a remainder of the present task to a position later in the order.
